# EUROPÄISCHE PATENTSCHRIFT

(11) **EP 0 950 080 B1**
(45) Veröffentlichungstag und Bekanntmachung des Hinweises auf die Patenterteilung: **09.08.2000**
(21) Anmeldenummer: 97954708.0
(22) Anmeldetag: 24.12.1997
(51) Int. Cl.: C09D 175/06, C08G 18/42, C08G 18/08

(54) **BESCHICHTUNGSZUSAMMENSETZUNG**
COATING COMPOSITION
COMPOSITION DE REVETEMENT

(30) Priorität: 27.12.1996 DE 19654296
(43) Veröffentlichungstag der Anmeldung: 20.10.1999
(73) Patentinhaber: Bollig & Kemper GmbH & Co. KG, 50827 Köln (DE)
(72) Erfinder: HILLE, Hans-Dieter, D-51467 Bergisch Gladbach (DE); MÜLLER, Horst, D-51069 Köln (DE)
(74) Vertreter: Stute, Ivo, Dipl.-Ing.
(86) Internationale Anmeldenummer: DE9703016
(87) Internationale Veröffentlichungsnummer: WO9829195

(56) Entgegenhaltungen:
- EP-A- 0 309 113
- US-A- 4 622 360
- US-A- 5 563 206
- CHEMICAL ABSTRACTS, vol. 117, no. 8, 24.August 1992 Columbus, Ohio, US; abstract no. 71808q, XP000375819 & JP 00 480 268 A (MITSUI TOATSU KAGAKU K. K. ) 13.März 1992
- CHEMICAL ABSTRACTS, vol. 123, no. 14, 2.Oktober 1995 Columbus, Ohio, US; abstract no. 171084t, XP000663567 & CHANG F.-F. ET AL: "POLYURETHANES 94" , SOC. PLAST. IND. POLYURETHANE DIV. , NEW YORK

## Beschreibung

Die vorliegende Erfindung betrifft eine Beschichtungszusammensetzung und deren Verwendung, insbesondere zur Lackierung von Karosserien in der Automobilindustrie.

Ein wesentliches Problem bei der Lackierung von Automobilkarosserien ist die Steinschlagfestigkeit der gesamten Lackierung sowie der UV-Schutz der elektrophoretisch aufgebrachten Schicht (KTL-Schicht).

Eine konventionelle Autolackschicht nach dem sogenannten "Basislack/Klarlackverfahren" mit ausreichender Steinschlagfestigkeit und gutem UV-Schutz besteht aus insgesamt vier voneinander unterschiedlichen Schichten (Vierschichtaufbau). Diese vier Schichten werden nacheinander in getrennten Lackieranlagen aufgetragen.
Die erste, direkt auf dem Autoblech befindliche Schicht ist eine elektrophoretisch aufgetragene Schicht (Electrocoatschicht, KTL-Schicht), die durch Elektrotauchlackierung - hauptsächlich kathodische Tauchlackierung (KTL) - zwecks Korrosionsschutz aufgebracht und anschließend eingebrannt wird. Die zweite, auf der Elektrocoatschicht befindliche und etwa 30 bis 40 µm dicke Schicht ist eine sogenannte Füllerschicht, die einerseits Schutz gegen mechanische Angriffe (Steinschlagschutzfunktion) bietet, andererseits die rauhe Oberfläche der Rohkarosserie für die nachfolgende Decklackierung glättet, kleinere Unebenheiten ausfüllt und die elektrophoretisch abgeschiedene Schicht (KTL-Schicht) vor der natürlichen UV-Strahlung schützt. Diese Schicht wird größtenteils durch Applikation eines Einbrennlackes, beispielsweise mit elektrostatischen Hochrotationsglocken und anschließendem Einbrennvorgang bei Temperaturen über 130°C erzeugt.
Die dritte, auf der Füllerschicht befindliche Schicht ist die Basislackschicht, die durch entsprechende Pigmente der Karosserie die gewünschte Farbe gibt. Der Basislack wird im herkömmlichen Spritzverfahren aufgetragen. Die Schichtdicke dieser herkömmlichen Basislackschicht liegt je nach Farbton zwischen etwa 12 bis 25 µm. Meistens wird diese Schicht in zwei Verfahrensschritten aufgebracht, beispielsweise in einem ersten Schritt durch Auftragung mittels elektrostatischer Hochrotationsglocken, gefolgt von einem zweiten Auftrag mittels pneumatischer Zerstäubung. Diese Schicht wird anschließend mit Infrarotstrahlern und/oder durch Warmluftkonvektion zwischengetrocknet.
Die vierte und oberste, auf der Basislackschicht befindliche Schicht ist die Klarlackschicht, die meistens in einem Auftrag durch elektrostatische Hochrotationsglocken aufgetragen wird. Sie verleiht der Karosserie den gewünschten Glanz und schützt den Basislack vor Umwelteinflüssen (UV-Strahlung, Salzwasser, etc.).
Anschließend werden die Basislackschicht und die Klarlackschicht gemeinsam eingebrannt.

Es ist ein Bestreben der Automobilindustrie, Kraftfahrzeuglackierungen mit im Vergleich zum Stand der Technik vergleichbarem Gesamteigenschaftsniveau, jedoch verringerter Schichtdicke des Gesamtlackaufbaus, bereitzustellen, welche den Herstellungsaufwand der Gesamtlackierung minimieren und mit möglichst wenig Einbrennschritten durchführbar sind.

In diesem Zusammenhang wird eine Lackierung bestehend aus drei voneinander verschiedenen Schichten, (Dreischichtaufbau) angestrebt, in dem auf die Füllerschicht des konventionellen Vierschichtaufbaus verzichtet und der Basislack direkt auf die elektrophoretisch abgeschiedene erste Schicht aufgebracht wird. Das bedeutet, daß der Basislack, dem bisher hauptsächlich dekorative Eigenschaften zukamen, nunmehr auch die funktionellen Eigenschaften der bisherigen Füllerschicht übernehmen muß.

Ein wesentliches Anliegen der Automobilindustrie hinsichtlich dieses Dreischichtaurbaus besteht darin, die Schichtdicke der Basislackschicht zu erhöhen um die KTL-Schicht wirksamer vor der UV-Strahlung zu schützen. Zwar ist in der Decklackschicht meistens ein UV-Absorber enthalten, jedoch dient dieser hauptsächlich zum Schutz des Klarlackes gegen radikalischen Abbau und zum Schutz des Basislackes, insbesondere der organischen Pigmente des Basislackes, Einen ausreichenden Schutz für die KTL-Schicht bietet dieser UV-Absorber nicht.

Das Problem bei einer einfachen Erhöhung der Schichtdicke der Basislackschicht besteht darin, daß die Koch- und Laufsicherheit sich drastisch verschlechtert.
Unter Kochsicherheit eines Lackes versteht man, daß die aufgetragene Lackschicht während des Einbrennvorganges keine Blasen wirft; unter Laufsicherheit, daß die aufgetragene Lackschicht während des Einbrennvorganges keine Nasenbildung zeigt.

Die bisherigen Versuche, herkömmlichen Basislack direkt auf die KTL-Schicht aufzubringen, resultierten in drastisch verschlechterten Eigenschaften des so erhaltenen Lackschichtaufbaus, insbesondere in einem unzureichenden Verhalten gegenüber Steinschlag.

Aus der EP-A-0 265 363 ist bekannt, eine zuvor eingebrannte, kataphoretisch aufgebrachte Grundierung (KTL-Schicht) mit einer nach dem naß-innaß-Verfahren aufgebrachten, herkömmlichen zweischichtigen Basislack/Klarlack-Deckschicht zu versehen. Von Nachteil ist, daß Steinschlagschäden an nach diesem Verfahren lackierten Kraftfahrzeugen besonders augenfällig zu Tage treten, da die Grundierungsschicht bei Steinschlag durch Decklackenthaftung großflächig freigelegt wird.

Aus der DE 195 12 017 ist bekannt, einen herkömmlichen Basislack naß-innaß direkt auf die KTL-Schicht aufzutragen, und beide Schichten gemeinsam einzuhrennen. Auf diese eingebrannte Schicht wird eine weitere herkömmliche Basislackschicht auf Wasserbasis naß-in-naß mit einer Decklackschicht aufgebracht und eingebrannt. Der Nachteil bei diesem Verfahren besteht darin, daß die bei den Automobilherstellern vorhandenen Lackierstraßen grundlegend umorganisiert und mit erheblichem Aufwand umgebaut werden müssen.

Ferner gibt es Bestrebungen, einen speziellen Basislack bereitzustellen, der sowohl die geforderten dekorativen als auch funktionellen Eigenschaften aufweist.

So ist aus der DE 195 29 394 bekannt, einen speziellen, freie Isocyanatgruppen enthaltenden wäßrigen Basislack zu verwenden, der direkt auf die eingebrannte KTL-Schicht aufgetragen wird. Dieser Basislack hat aber den Nachteil, daß er nicht lagerstahil ist und nur mit einer 2K-Anlage verarbeitet werden kann.

Ferner ist aus der DE 195 04 947 bekannt, einen Basislack durch einen Kompensationslack derart zu konditionieren, daß die gewünschten Eigenschaften erhalten werden. Allerdings ist es nicht möglich, eine für einen ausreichenden UV-Schutz genügend hohe Schichtdicke zu erreichen.

Aufgabe der vorliegenden Erfindung ist die Bereitstellung einer Beschichtungszusammensetzung, die für die Automobilserienlackierung verwendet werden kann und hierbei sowohl die dekorativen Eigenschaften der herkömmlichen Basislackschicht als auch die funktionellen Eigenschaften der herkömmlichen Füllerschicht beim konventionellen Vierschichtaufhau verleiht.

Diese Beschichtungszusammensetzung muß darüber hinaus in einer solchen Schichtdicke aufgetragen werden können, so daß einerseits ein wirksamer UV-Schutz der ersten KTL-Schicht gewährleistet ist, ohne daß andererseits bei diesen Schichtdicken die bekannten Probleme in bezug auf Koch- und Laufsicherheit, verglichen mit herkömmlichen Basislacken des Standes der Technik, auftreten.

Diese Aufgabe wird erfindungsgemäß durch Beschichtungszusammensetzung gelöst, erhältlich durch Mischen
a) einer Zusammensetzung A, diese enthaltend eine Dispersion eines Polyurethans mit einer Säurezahl von mehr als 20, das als Weichsegment mindestens ein Polytetrahydrofuransegment mit einem zahlenmittleren Molekulargewicht zwischen 650 und 5.000 und als Hartsegment mindestens ein von einem Diisocyanat abgeleitetes Segment aufweist; mit
b) einer Zusammensetzung B, diese enthaltend eine Dispersion eines Polyurethans mit einer Säurezahl von weniger als 20, das als Weichsegment mindestens ein Polytetrahydrofuransegment mit einem zahlenmittleren Molekulargewicht zwischen 800 und 5.000 und als Hartsegment mindestens ein aus von einem Diisocyanat abgeleitetes Segment aufweist.

Die Säurezahl wird eingestellt, indem eine Verbindung, die mindestens zwei mit Isocyanatgruppen reagierende Gruppen und mindestens eine zur Anionenbildung befähigte Gruppe enthält, der einzustellenden Polyurethandispersion in entsprechender Menge hinzugegeben wird.
Als Verbindung, die mindestens zwei mit Isocyanatgruppen reagierende Gruppen und mindestens eine zur Anionenbildung befähigte Gruppe enthält, sind beispielsweise Dihydroxypropionsäure, Dimethylolpropionsäure, Dihydroxybernsteinsäure oder Dihydroxybenzoesäure geeignet.
Aminogruppenhaltige Verbindungen sind beispielsweise α,δ-Diaminovaleriansäure, 3,4-Diaminobenzoesäure, 2,4-Diamino-toluol-sulfonsäure-(5) und 4,4'-Diamino-diphenylethersulfonsäure.
Die Verbindung, die mindestens zwei mit Isocyanatgruppen reagierende Gruppen und mindestens eine zur Anionenbildung befähigte Gruppe enthält, kann vor dem Zusetzen mit einem tertiären Amin neutralisiert werden. Geeignete tertiäre Amine zur Neutralisation der anionischen Gruppen sind beispielsweise Trimethylamin, Triethylamin, Dimethylanilin, Diethylanilin und Triphenylamin, insbesondere N,N-Dimethylethanolamin.

Je nach gewünschtem Farbton enthält die erfindungsgemäße Beschichtungszusammensetzung zusätzlich noch ein farbgebendes Pigment und/oder ein Effektpigment.
Geeignete farbgebende Pigmente sind insbesondere Absorptionspigmente und/oder Füllstoffe, wie z.B. Titandioxid, Eisenoxidpigmente, Ruß, Siliciumdioxid, Azopigmente, Phthalocyaninpigmente, Chinacridonpigmente, Diketopyrrolopyrrolpigmente, Perlenpigmente, Indanthronpigmente, Talkum, Glimmer, Kaolin, Kreide, Bariumsulfat, verschiedene Kieselsäuren, Silikate und organische Fasern.
Beispiele für Effektpigmente sind die plättchenförmigen üblicherweise in Effektlacken verwendete Pigmente, wie Metallpigmente, z.B. aus Titan, Aluminium oder Kupfer; Interferenzpigmente, wie z.B. metalloxidbeschichtete Metallpigmente, z.B. titandioxidbeschichtetes oder mischoxidbeschichtetes Aluminium, beschichteter Glimmer, z.B. titandioxidbeschichteter oder mischoxidbeschichteter Glimmer, Mikrotitandioxid und Graphiteffektpigmente, plättchenförmiges Eisenoxid (miraceous iron oxide), Molybdänsulfidpigmente, plättchenförmige Kupferphthalocyaninpigmente und Bismutoxichloridplättchen, beschichtete Glasflakes.

Die Verwendung von farbgebenden Pigmenten und Effektpigmenten ist allerdings abhängig vom jeweiligen Farbton. Soll beispielsweise der zu beschichtende Gegenstand einen Uni-Farbton (d.h. einen Farbton ohne Nletalliceffekt) erhalten, so enthält die Beschichtungszusammensetzung nur ein farbgebendes Pigment.
Soll dagegen der zu beschichtende Gegenstand einen Silber-Farbton erhalten, so enthält die Beschichtungszusammensetzung nur das entsprechende Effektpigment Aluminiumbronze.
Wenn der zu beschichtende Gegenstand aber einen Blau-Metallicfarbton erhalten soll, so enthält die Beschichtungszusammensetzung sowohl ein farbgebendes Pigment als auch ein Effektpigment.

Sofern die Beschichtungszusammensetzung ein farbgebendes Pigment enthält, wird dieses - vor dem Mischen der beiden Zusammensetzungen A und B - in die Zusammensetzung A eingebracht. Besonders vorteilhaft ist, wenn das farbgebende Pigment mit der Zusammensetzung A solange gemahlen wird, bis das farbgebende Pigment die gewünschte Korngröße aufweist. Sofern die Beschichtungszusammensetzung ein Effektpigment enthält, wird dieses - vor dem Mischen cler beiden Zusammensetzungen A und B - in die Zusammensetzung B eingebracht. Das Effektpigment kann hierzu in der Zusammensetzung B angerieben werden, beispielsweise in dem man das handelsübliche Effektpigment, daß meistens als Pulver oder in Pastenform vorliegt, zunächst mit bevorzugt wasserverdünnbaren organischen Lösemitteln und Additiven versetzt und zu einer Paste verarbeitet. Dabei ist darauf zu achten, daß die Effektpigmente beim Vermischen mechanisch nicht beschädigt werden.

Der besondere Vorteil dieser erfindungsgemäßen Beschichtungszusammensetzung ist, daß daraus hergestellte, d.h. ausgehärtete Schichten ausgezeichnete elastomere Eigenschaften aufweisen, ohne daß diese elastomere Eigenschaft das Gesamteigenschaftsniveau der fertigen Lackschicht negativ beeinflußt (z.B. verschlechterte Schleifeigenschaften). Diese Eigenschaft ist überall dort eine wichtige Voraussetzung, wo die fertige Lackschicht hohen mechanischen Anforderungen ausgesetzt ist.
Diese elastomere Eigenschaft ist von entscheidender Bedeutung und beruht auf der Rückprallelastizität der aus der erfindungsgemäßen Beschichtungszuammensetzung hergestellten Schicht. Unter Rückprallelastizität ist die Eigenschaft gemeint, durch die ein mechanischer Impuls (z.B. Steinschlag) durch eine elastische Deformation aufgefangen wird. Dadurch wird eine Verletzung des Materials verhindert.
Bei den von außen auf die Lackierung wirkenden Belastungen kann es sich um jedwede Einwirkung mechanischer Art handeln, wie beispielsweise Steinschlag bei Fahrzeuglackierungen, Aneinanderreihen oder -schlagen lackierter Teile oder von beliebigen Gegenständen auf lackierten Oberflächen.

Die Zusammensetzung B kann darüber hinaus zusätzlich einen Vernetzer, handelsübliche Additive und/oder weitere Bindemittel enthalten.

Insbesondere ist es vorteilhaft, wenn das Polytetrahydrofuransegment der beiden Dispersionen, gleich oder verschieden, ein zahlenmittleres Molekulargewicht zwischen 1.000 und 2.900, insbesondere ein zahlenmittleres Molekulargewicht von 2.000, aufweist.

In einer bevorzugten Ausführungsform werden solche Polyurethane für die Zusammensetzung A und/oder B verwendet, deren Hartsegment von einem Diisocyanat abgeleitet ist, das ausgewählt ist aus aromatischen Diisocyanaten wie 3,3'-Dimethyl-4,4'-diphenylmethandiisocyanat (3,3'-Dimethyl-4,4'-diisocyanatodiphenylmethan), 4 ,4'-Methylendiphenyldiisocyanat (MDI, 4,4'-Diisocyanatodiphenylmethan), 2,4-Toluylendiisocyanat (TDI, 2 ,4-Diisocyanatotoluol), Tolidin-4,4'-diisocyant (TODI, 3,3'-Dimethyl-4,4'-diisocyanatobenzidin), 1,5-Naphtylendiisocyanat (NDI, 1 5-Diisocyanatonaphtalin), 1,3-Bis(3-isocyanato-4-methylphenyl)-2,4-dioxo-1,3-diazetidin (Desmodur TT), und 1,3-Bis(1-isocyanato-1-methylethyl)benzol (TMXDI, m-Tetramethylxylylendiisocyanat); und insbesondere aus aliphatischen Diisocyanaten wie 1,1-Methylenbis(4-isocyanatocyclohexan) (4,4'-Dicyclohexylmethandiisocyanat, Desmodur W), Hexamethylendiisocyanat (HMDI, 1,6-Diisocyanatohexan, Desmodur H), Isophorondiisocyanat (IPDI, 3,5,5-Trimethyl-1-isocyanato-3-isocyanatomethylcyclohexan), 1,4-Cyclohexyldiisocyanat (CHDI, trans,-trans-1,4-Diisocyanatocyclohexan).

Gemäß einer besonderen Ausführungsform der Erfindung ist ein Teil der Hartsegmente, die von einem Diisocyanat abgeleitet sind, durch 0.1 bis 2 Gew.-% - bezogen auf die Isocyanatkomponente des Polyurethans - solcher Segmente ersetzt, die sich von einem Triisocyanat ableiten; wobei das Triisocyanat ausgewählt ist aus aromatischen Triisocyanaten wie Tris(4-isocyanatophenyl)methan (Desmodur R), 1,3,5-Tris(3-isocyanato-4-methylphenyl)-2,4,6-trioxohexahydro-1,3,5-triazin (Desmodur IL); Addukten aus aromatischen Diisocyanaten wie das Addukt von 2,4-Toluylendiisocyanat (TDI, 4-Diisocyanatotoluol) und Trimethylolpropan (Desmodur L); und insbesondere aus aliphatischen Triisocyanaten wie N-Isocyanatohexylaminocarbonyl-N,N'-bis(isocyanatohexyl)harnstoff (Desmodur N), 2,4,6-Trioxo-1,3,5-tris(6-isocyanatohexyl)hexahydro-1,3,5-triazin (Desmodur N3390), 2,4,6-Trioxo-1,3,5-tris(5-isocyanato-1,3,3-trimethylcyclohexylmethyl)hexahydro-1,3,5-triazin (Desmodur Z4370).

In einer bevorzugten Ausführungsform liegt der Anteil an Polyurethan, bezogen auf den Festkörper der Beschichtungszusammensetzung insgesamt. zwischen 10 und 85 %, vorzugsweise zwischen 20 und 65 %, insbesondere zwischen 30 und 60 %.

Unter dem Begriff "Festkörper" werden alle nichtflüchtigen Bestandteile der Beschichtungszusammensetzung verstanden, d.h. Bindemittel, Pigmente sowie gegebenenfalls Füllstoffe, Additive etc.

Das Verhältnis von Zusammensetzung A zur Zusammensetzung B in der fertigen Beschichtungszusammensetzung kann - bezogen auf deren Festkörper - zwischen 1 : 5 und 8 : 1, vorzugsweise zwischen 1 : 4 und 4 : 1, insbesondere 1 : 2 und 2 : 1, betragen.

Es ist vorteilhaft, wenn das zahlenmittlere Molekulargewicht des Polyurethans der jeweiligen Dispersion, gleich oder verschieden, zwischen 4.000 und 50.000, vorzugsweise zwischen 6.000 und 25.000, liegt.

Vorzugsweise liegt der Anteil an Polytetrahydrofuransegmenten in dem Polyurethan der jeweiligen Dispersion, gleich oder verschieden, bezogen auf den Festkörper des entsprechenden Polyurethans, zwischen 30 und 80 %, insbesondere zwischen 45 und 70 %.

In einer besonders bevorzugten Ausführungsform der vorliegenden Erfindung weist das Polyurethan der jeweiligen Dispersion, gleich oder verschieden, zusätzlich ein kurzkettiges Polyolsegment mit 2 bis 12 Kohlenstoffatomen auf.
Dieses kurzkettige Polyolsegment kann insbesondere ausgewählt sein aus 1,6-Hexandiol, Neopentylglykol, Dimethylolcyclohexan, Trimethylolpropanmonoallylether, Hydroxypivalinsäureneopentylglykolester, Ethylenglykol, Propylenglykol, Trimethylolpropan.

Der Anteil des Diisocyanatsegments in dem Polyurethan der jeweiligen Dispersion kann unahhängig voneinander, bezogen auf den Festkörper des Polyurethans, zwischen 5 und 40 %, vorzugsweise zwischen 10 und 20 %, liegen.

Das in allen Ausführungsformen der vorliegenden Erfindung beschriebene Polyurethan kann als solches, d.h. als Präpolymer, eingesetzt werden oder auch durch geeignete Maßnahmen verlängert werden. Eine Möglichkeit ist beispielsweise die Erhöhung des Molekulargewichtes durch Kettenverlängerungsmittel. Als Kettenverlängerungsmittel können beliebige Di- oder Polyamine eingesetzt werden.
Solche Di- und Polyamine sind beipielsweise solche mit primären und/oder sekundären Aminogruppen. Polyamine sind im wesentlichen Alkylen-Polyamine mit 1 bis 40 Kohlenstoffatomen, vorzugsweise mit etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Isophorondiamin, 1-Amino-3-aminomethyl-3,5,5-trimethylcyclohexan, 4,4'-Diaminodicyclohexylmethan und Aminoethylethanolamin.
Insbesondere werden als Di- oder Polyamine 2-Methyldiaminopentan, Ethylendiamin, N,N-Diethylentriamin, Adipinsäurebishydrazid uncl Hydrazin verwendet.
Demzufolge kann das Polyurethan mindestens ein aus dem Kettenverlängerungsmittel stammendes Di- oder Polyaminsegment, insbesondere ein 2-Methyldiaminopentan-, Ethylendiamin- N,N-Diethylentriamin-, Adipinsäurebishydrazid- und Hydrazinsegment, aufweisen.

Es ist aber ebenfalls möglich, das Polyurethan in der Zusammensetzung A und/oder B, unabhängig voneinander, teilweise durch ein Polyesterharz oder eine wäßrige Polyesterdispersion zu ersetzen.
Als Polyesterharz kann man solche Polyesterharze verwenden, wie sie in M.J. Husbands et al. "A Manual of Resins for Surface Coatings", (1987) SITA Technology, London, Band 3, S. 129 bis 141 beschrieben sind

Unter einer wäßrigen Polyesterdispersion versteht man jede beliebige Dispersion vernetzter oder unvernetzter Polyesterteilchen, insbesondere Dispersionen von Polyestermikroteilchen (mit einem Melaminharz vernetzte Polyesterdispersion), wie sie z.B. in der DE-A-39 40 316 beschrieben sind. Dies ist insbesondere dann von Vorteil, wenn man bei der erfindungsgemäßen Beschichtungszusammensetzung einen ausgeprägten Metalliceffekt erreichen will.

Es kann gemäß einer besonderen Ausführungsform der vorliegenden Erfindung vorteilhaft sein, die erfindungsgemäße Beschichtungszusammensetzung durch geeignete Vernetzungsmittel zu vernetzen.
Als Vernetzungsmittel wird vorzugsweise mindestens ein Vernetzer verwendet, ausgewählt aus verkappten Isocyanaten, Melaminharzen und insbesondere TACT.
Dementsprechend kann die aus der erfindungsgemäßen Beschichtungszusammensetzung erhaltene Schicht Segmente enthalten, die aus verkappten Isocyanaten, Melaminharzen und insbesondere TACT stammen.

Als Vernetzungsmittel können solche verkappten Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperaturen beständig ist, bei erhöhten Temperaturen, in der Regel im Bereich von etwa 90 bis 300 °C, aber reagiert. Bei der Herstellung der blockierten Polyisocyanate können beliebige, für die Vernetzung geeignete organische Polyisocyanate verwendet werden. Bevorzugt sind die Isocyanate, die etwa 3 bis etwa 36, insbesondere etwa 8 bis 15, Kohlenstoffatome enthalten. Beispiele von geeigneten Diisocyanaten sind die oben genannten Diisocyanate.
Es können auch Polyisocyanate von höherer Isocyanatfunktionalität verwendet werden. Beispiele dafür sind Tris-(4-isocyanatophenyl)methan, 1,3,5-Triisocyanatobenzol, 2,4,6-Triisocyanatotoluol, 1,3,5-Tris-(6-isocyanatohexyl)biuret, Bis-(2,5-diisocyanato-4-methylphenyl)methan und polymere Polyisocyanate, wie Dimere und Trimere von Diisocyanatotoluol. Ferner kann man auch Mischungen von Polyisocyanaten benutzen.
Die bei der Erfindung als vernetzungsmittel in Betracht kommenden organischen Polyisocyanate können auch Präpolymere sein, die sich beispielsweise von einem Polyol, einschließlich eines Polyetherpolyols oder eines Polyesterpolyols ableiten. Dazu werden bekanntlich Polyole mit einem Überschuß von Polyisocyanaten umgesetzt, wodurch Präpolymere mit endständigen Isocyanatgruppen entstehen. Beipiele von Polyolen, die hierfür verwendet werden können, sind einfache Polyole, wie Glykole, z.B. Ethylenglykol und Propylenglykol, und andere Polyole, wie Glycerin, Trimethylolpropan, Hexantriol und Pentaerythrit; ferner Monoether wie Diethylenglykol und Dipropylenglykol sowie Polyether, die Addukte aus solchen Polyolen und Alkylenoxiden sind. Beispiele von Alkylenoxiden, die sich für eine Polyaddition an diese Polyole unter Bildung von Polyethern eignen, sind Ethylenoxid, Propylenoxid, Butylenoxid und Styroloxid. Man bezeichnet diese Polyadditionsprodukte im allgemeinen als Polyether mit endständigen Hydroxylgruppen. Sie können linear oder verzweigt sein. Beispiele von solchen Polyethern sind Polyoxyethylenglykol mit einem Molekulargewicht von 1.540, Polyoxypropylenglykol mit einem Molekulargewicht von 1.025, Polyoxytetramethylenglykol, Polyoxyhexamethylenglykol, Polyoxynonamethylenglykol, Polyoxydecamethylenglykol, Polyoxydodecamethylenglykol und Mischungen davon. Andere Typen von Polyoxyalkylenglykolethern können ebenfalls verwendet werden. Besonders geeignete Polyetherpolyole sind diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerin, Trimethylolethan, Trimethylolpropan, 1,2,6-Hexantriol, Dipentaerythrit, Tripentaerythrit, Polypentaerythrit, Methyiglucosiden und Saccharose mit Alkylenoxiden wie Ethylenoxid, Propylenoxid oder Mischungen davon. Für die Blockierung der Polyisocyanate können beliebige geeignete aliphatische, cycloaliphatische oder aromatische Alkylmonoalkohole verwendet werden. Beispiele dafür sind aliphatische Alkohole wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; aromatische Alkylalkohole, wie Phenylcarbinol und Methylphenylcarbinol. Es können auch geringe Anteile an höhermolekularen und relativ schwer flüchtigen Monoalkoholen gegebenenfalls mitverwendet werden, wobei diese Alkohole nach ihrer Abspaltung als Weichmacher in den Überzügen wirken.
Andere geeignete Blockierungsmittel sind Oxime, wie Methylethylketonoxim, Acetonoxim und Cyclohexanonoxim sowie auch Caprolactame, Phenole und Hydroxamsäureester. Bevorzugte Blockierungsmittel sind Malonester, Acetessigester und β-Diketone.
Die blockierten Polyisocyanate werden hergestellt, in dem man das Verkappungsmittel in ausreichender Menge mit dem organischen Polyisocyanat umsetzt, so daß keine freien Isocyanatgruppen mehr vorhanden sind.

Als Vernetzungsmittel können solche Melaminharze verwendet werden, wie sie in "Lackharze, D. Stoye, W. Freitag, Hanser Verlag, München (1996), S. 104 bis 126 beschrieben sind
Bei TACT handelt es sich um Tris(alkoxycarbonylamino)-1,3,5-triazine, Vorzugsweise werden Tris(methoxycarbonylamino)-1,3,5-triazin, Tris(butoxycarbonylamino)-1,3,5-triazin oder eine Mischung davon verwendet. Solche Verbindungen werden von der Firma Cytec hergestellt und vertrieben.

Neben den beschriebenen Komponenten kann die erfindungsgemäße Beschichtungszusammensetzung lackübliche Hilfsstoffe, wie z.B. Katalysatoren, Verlaufsmittel und Lichtschutzmittel, enthalten.

Hinsichtlich einer detaillierten Herstellung von Polyurethanen, deren Ausgangsprodukte sowie die Techniken und Verfahren zu deren Modifizierung, wie beispielsweise Kettenverlängerung, Vernetzung, wird auf die Literatur von D. Dieterich "Aqueous Emulsions, Dispersions and Solutions of Polyurethanes; Synthesis and Properties" in Progress in Organic Coatings, 9 (1981), S. 281 bis 340; "Ullmann's Encyclopedia of Industrial Chemistry", 5. Aufl., Band 21, S. 665 bis 716 und M.J. Husbands et al. "A Manual of Resins for Surface Coatings", (1987) SITA Technology, London, Band 3, S. 1 bis 59 verwiesen.

Gemäß einer besonders bevorzugten Ausführungsform wird die erfindungsgemäße Beschichtungszusammensetzung zur Herstellung einer Beschichtung für ein elektrisch leitfähiges Substrat oder für eine Kunststoffoberfläche verwendet.

Unter dem Begriff "elektrisch leitfähiges Substrat" wird sowohl unbehandeltes als auch gegen Korrosion vorhehandeltes (beispielsweise phosphatiertes) Metall verstanden. Hierunter fallen auch Kunststoffoberflächen, die durch geeignete Maßnahmen mit einer elektrisch leitenden Schicht überzogen wurden.

Diese Beschichtung kann eine Mehrschichtlackierung sein, insbesondere eine Mehrschichtlackierung für die Automobilindustrie.

Die Mehrschichtlackierung kann aus drei voneinander verschiedenen Schichten bestehen, d.h. aus
a) einer ersten, auf dem elektrisch leitfähigen Substrat befindlichen Schicht aus einem elektrophoretisch abgeschiedenen Überzugsmittel;
b) einer zweiten, farbgebenden Schicht aus der erfindungsgemäßen Beschichtungszusammensetzung; und
c) einer dritten Schicht aus einem Klarlack.

Das besondere bei dieser erfindungsgemäßen Ausführungsform (Dreischichtlackierung) ist, daß die ausgehärtete, aus der erfindungsgemäßen Beschichiungszusammensetzung stammende Schicht sich bei vorgegebener mechanischer Belastung nicht oder nur von der ersten Schicht aus der Elektrotauch-Lackierung ablöst.

Die Mehrschichtlackierung kann aber auch aus vier voneinander verschiedenen Schichten bestehen, d.h. aus
a) einer ersten, auf dem elektrisch leitfähigen Substrat befindlichen Schicht aus einem elektrophoretisch abgeschiedenen Überzugsmittel;
b) einer zweiten Schicht aus einer Grundierung oder einem Füller;
c) einer dritten, farbgebenden Schicht aus der erfindungsgemäßen Beschichtungszusammensetzung; und
d) einer vierten Schicht aus einem Klarlack.

Ein Vorteil bei Verwendung der Beschichtungszusammensetzung in diesem Vierschichtaufbau ist, daß die ausgehärtete, aus der erfindungsgemäßen Beschichtungszusammensetzung stammende dritte Schicht die Steinschlagschutzeigenschaften der zweiten Füllerschicht noch weiter positiv beeinflußt.

Durch die Verwendung dieser speziellen Beschichtungszusammensetzung im Dreischichtaufbau kann eine - bezogen auf herkömmliche Basislacke - wesentlich höhere Schichtdicke erreicht werden. Die Dicke der ausgehärteten, aus der erfindungsgemäßen Beschichtungszusammensetzung hergestellten Schicht kann zwischen 15 und 55 µm liegen.

Bei den elektrophoretisch abzuscheidenden Überzugsmitteln handelt es sich um wäßrige Beschichtungszusammensetzungen mit einem Festkörper von etwa 10 bis 20 Gew.-%, die üblicherweise Bindemittel, ionische oder in ionische Gruppen überführbare Substituenten sowie zur chemischen Vernetzung fähige Gruppen tragen, sowie Pigmente und weitere übliche Additive enthalten.
Beispiele für solche Elektrotauchlacke sind in DE-A-28 24 418, DE-A-33 24 211, EP-A-082 291, EP-A-178 531, EP-A-227 975, EP-A-234 395, EP-A-245 786, EP-A-261 385, EP-A-310 971, EP-A-333 327, EP-A-414 199. EP-A-456 270, EP-A-476 514 und US-A-3 922 253 beschrieben.

Die Klarlackschicht, die über der aus der erfindungsgemäßen Beschichtungszusammensetzung erhaltenen Schicht angeordnet ist, kann erhalten werden durch Aufbringen und Einbrennen einer üblichen, lösemittelhaltigen oder wäßrigen Klarlackzusammensetzung, die als Einkomponenten- oder Zweikomponentenmischung vorliegt und ein oder mehrere Basisharze als filmbildende Bindemittel enthält. Sofern die Bindemittel nicht selbstvernetzend sind, kann die Klarlackzusammensetzung gegebenenfalls auch Vernetzer enthalten. Als filmbildende Bindemittel (Basisharze) können beispielsweise Polyester-, Polyurethan- und/oder Poly(meth)acrylatharze verwendet werden.
Neben den chemisch vernetzenden Bindemitteln sowie gegebenenfalls Vernetzern können diese Klarlacke lackübliche Hilfsstoffe, wie z.B. Katalysatoren, Verlaufsmittel und Lichtschutzmittel enthalten.

Beispiele für lösemittelhaltige Klarlackzusammensetzung in Einkomponenten- oder Zweikomponentenmischung sind in DE-A-58 26 693, DE-A-40 17 075, DE-A-41 24 167, DE-A-41 33 704, DE-A-42 04 518, DE-A-42 04 611, EP-A-257 513, EP-A-408 858, EP-A-523 267 und EP-A-557 822 beschrieben. Beispiele für wäßrige Klarlackzusammensetzung in Einkomponenten- oder Zweikomponentenmischung sind in DE-A-39 10 829, DE-A-4() 09 931, DE-A-40 09 932, DE-A-41 01 696, DE-A-41 32 430, DE-A-41 34 290, DE-A-42 03 510, EP-A-365 098, EP-A-365 775, EP-A-469 079 und EP-A-546 640, insbesondere in der DE-A-44 19 216 und DE-A-44 42 518, beschrieben.

In einer besonders bevorzugten Ausführungsform wird die dritte Schicht hergestellt aus einem Pulverklarlack oder einer Pulverklarlackslurry. In bezug auf den Pulverklarlack oder die Pulverklarlackslurry wird auf die DE-A-42 22 194, DE-A-42 27 580, EP-A-509 392, EP-A-509 393, EP-A-522 648, EP-A-544 206, EP-A-555 705, EP-A-652 265, EP-A-666 779, sowie auf die EP-A-714 958, verwiesen.

Als Test zur Überprüfung des Steinschlagschutzes bei Autolacken gibt es verschiedene Methoden, die zwar auf das spezielle Anwendungsgebiet hin angepaßt wurden, aber alle darauf abzielen, daß die mechanische Einwirkung möglichst genau reproduziert werden kann. So gibt es beispielsweise in der Automobilindustrie vorgeschriebene Tests, die versuchen, den Steinschlag durch Auftreffen einer Kugel (Mercedes-Benz AG, Lackprüfungsgerät mit Kugelstoßprüfgerät bei Temperaturen von -20 bis +50 °C, einem Kugeldurchmesser wahlweise von 2 bis 4 mm und einer Schußgeschwindigkeit von 50 bis 300 km/h) oder eines meißelartigen Prüfkörpers (Test VDA 621-428 der BMW AG) auf die fertig lackierte Oberfläche bei genau definierten Temperaturen (Raumtemperatur und -20 °C) uncl weiteren genau definierten Parametern zu simulieren.

Die folgenden Beispiele dienen der Erläuterung der Erfindung ohne diese zu begrenzen.

### 1. Herstellung von Polyestern

### 1.1 Polyester 1

In einem 4-l-Reaktionsgefäß mit Rührer und Wasserabscheider werden werden 2912,0 Teile Polytetrahydrofuran mit einem mittleren Molekulargewicht von 2000 (Terathane® 2000 der Firma DuPont) und 106,3 Teile Adipinsäure bis zu einer Säurezahl von < 4 verestert. Man erhält einen Polyester mit einem mittleren Molekulargewicht von 3940.

### 1.2 Polyester 2

In einem 4-1-Reaktionsgefäß mit Rührer und Füllkörperkolonne werden 805,4 Teile 1,6-Hexandiol, 709,8 Teile Neopentylglykol und 1616,2 Teile Phthalsäureanhydrid bis zu einer Säurezahl von < 4 verestert. Man erhält einen Polyester mit einem mittleren Molekulargewicht von 1020.

### 1.3 Polyester 3

In einem 4-1-Reaktionsgefäß mit Rührer und Füllkörperkolonne werden 650 Teile 1,6-Hexandiol, und 2313 Teile Pripol® 1013 (Dimerfettsäure von der Firma UNICHEMA) bis zu einer Säurezahl von < 4 verestert. Man erhält einen Polyester mit einem mittleren Molekulargewicht von 2013.

### 2. Herstellung von wasserverdünnbaren Polyurethanharzen

### 2.1 Polyurethanharzdispersion 1

In einem 10-1-Reaktionsgefäß mit Rührer und Rückflußkühler wird eine Mischung aus 1512,0 Teilen Polytetrahydrofuran mit einem mittleren Molekulargewicht von 1000 (Terathane® 1000 der Firma DuPont), 128,7 Teilen Dimethylolpropionsäure, 523,6 Teilen Tetramethylxylylendiisocyanat, 240,5 Teilen N-Methylpyrrolidon und 1,5 Teilen Dibutylzinndilaurat auf eine Reaktionstemperatur von 100 °C erhitzt, bis der NCO-Gehalt gegen Null % gefallen ist. Das Gemisch wird mit 481,0 Teilen Butylglykol weiter verdünnt. Anschließend wird eine Mischung aus 68,4 Teilen N,N-Dimethylethanolamin und 1300,0 Teilen deionisiertem Wasser zugegeben und der Festkörper mit 1929,7 Teilen deionisiertem Wasser auf 35 % eingestellt. Man erhält eine Polyurethandispersion mit einem pH-Wert von 7,50. Das Polymere hat eine Säurezahl von 25.

### 2.2 Polyurethanharzdispersion 2

In einem 10-1-Reaktionsgefäß mit Rührer und Rückflußkühler wird eine Mischung aus 2101,3 Teilen Polyester 1, 148,4 Teilen Dimethylolpropionsäure, 300,3 Teilen Tetramethylxylylendiisocyanat, 283,3 Teilen N-Methylpyrrolidon und 1,0 Teilen Dibutylzinndilaurat auf eine Reaktionstemperatur von 100 °C erhitzt, bis der NCO-Gehalt gegen Null % gefallen ist. Das Gemisch wird mit 566,7 Teilen Butylglykol weiter verdünnt. Anschließend wird eine Mischung aus 78.8 Teilen N,N-Dimethylethanolamin und 1498,1 Teilen deionisiertem Wasser zugegeben und der Festkörper mit 2523,0 Teilen deionisiertem Wasser auf 34 % eingestellt. Man erhält eine Polyurethandispersion mit einem pH-Wert von 7,41. Das Polymere hat eine Säurezahl von 25.

### 2.3 Polyurethanharzdispersion 3

In einem 10-1-Reaktionsgefäß mit Rührer und Rückflußkühler wird eine Mischung aus 1563,3 Teilen Polytetrahydrofuran mit einem mittleren Molekulargewicht von 650 (Terathane® 650 der Firma DuPont), 148,7 Teilen Dimethylolpropionsäure, 767,4 Teilen Tetramethylxylylendiisocyanat, 275,5 Teilen N-Methylpyrrolidon und 2,5 Teilen Dibutylzinndilaurat auf eine Reaktionstemperatur von 100 °C erhitzt, bis der NCO-Gehalt gegen Null % gefallen ist. Das Gemisch wird mit 551,0 Teilen Butylglykol weiter verdünnt. Anschließend wird eine Mischung aus 79 Teilen N,N-Dimethylethanolamin und 1497,9 Teilen deionisiertem Wasser zugegeben und der Festkörper mit 2201,0 Teilen deionisiertem Wasser auf 35% eingestellt. Man erhält eine Polyurethandispersion mit einem pH-Wert von 7,46. Das Polymere hat eine Säurezahl von 25.

### 2.4 Polyurethandispersion 4 (ohne PTHF)

Es wird wie bei der Herstellung von Polyurethandispersion 1 verfahren. Anstelle von 1512,0 Teilen Polytetrahydrofuran 1000 werden jedoch 1542,0 Teile von Polyester 2 verwendet. Man erhält eine Polyurethandispersion mit einem Festkörpergehalt von 35% und einem pH-Wert von 7,20. Das Polymere hat eine Säurezahl von 25.

### 2.5 Polyurethanharzdispersion 5

In einem 6-1-Reaktionsgefäß mit Rührer und Rückflußkühler wird eine Mischung aus 840,0 Teilen Polytetrahydrofuran mit einem mittleren Molekulargewicht von 2000 (Terathane® 2000 der Firma DuPont), 116,5 Teilen 1,6 Hexandiol, 50,7 Teilen Dimethylolpropionsäure, 486,8 Teilen Tetramethylxylylendiisocyanat, 630,0 Teilen Methylethylketon und 1,5 Teilen Dibutylzinndilaurat auf eine Reaktionstemperatur von 80 °C erhitzt, bis der NCO-Gehalt 0,67 % beträgt. Danach wird eine Mischung aus 14,5 Teilen 2-Methylpentamethylendiamin und 326,0 Teilen Wasser zugegeben. Anschließend wird eine Mischung aus 33,6 Teilen N,N-Dimethylethanolamin und 2848,8 Teilen deionisiertem Wasser zugegeben und das Methylethylketon im Vakuum vollständig abdestilliert. Man erhält eine Polyurethandispersion mit einem Festkörpergehalt von 33 % und einem pH-Wert von 8,80. Das Polymere hat eine Säurezahl von 14.

### 2.6 Polyurethanharzdispersion 6

In einem 6-1-Reaktionsgefäß mit Rührer und Rückflußkühler wird eine Mischung aus 661,9 Teilen Polyester 1, 88,7 Teilen 1,6 Hexandiol, 38,6 Teilen Dimethylolpropionsäure, 333.8 Teilen Tetramethylxylylendiisocyanat, 481,3 Teilen Methylethylketon und 1,5 Teilen Dibutylzinndilaurat auf eine Reaktionstemperatur von 80 °C erhitzt, bis der NCO-Gehalt 0,63 % beträgt. Danach wird eine Mischung aus 10,5 Teilen 2-Methylpentamethylendiamin und 232,9 Teilen Wasser zugegeben. Anschließend wird eine Mischung aus 25,6 Teilen N,N-Dimethylethanolamin und 2150,2 Teilen deionisiertem Wasser zugegeben und das Methylethylketon im Vakuum vollständig abdestilliert. Man erhält eine Polyurethandispersion mit einem Festkörpergehalt von 32 % und einem pH-Wert von 8,60. Das Polymere hat eine Säurezahl von 14.

### 2.7 Polyurethanharzdispersion 7

In einem 6-1-Reaktionsgefäß mit Rührer und Rückflußkühler wird eine Mischung aus 471,2 Teilen Polytetrahydrofuran mit einem mittleren Molekulargewicht von 650 (Terathane® 650 der Firma DuPont), 80,4 Teilen 1,6 Hexandiol, 35,0 Teilen Dimethylolpropionsäure, 442,2 Teilen Tetramethylxylylendiisocyanat, 440,9 Teilen Methylethylketon und 1,5 Teilen Dibutylzinndilaurat auf eine Reaktionstemperatur von 80 °C erhitzt, bis der NCO-Gehalt 0,69 % beträgt. Danach wird eine Mischung aus 10,5 Teilen 2-Methylpentamethylendiamin und 233,6 Teilen Wasser zugegeben. Anschließend wird eine Mischung aus 23,2 Teilen N,N-Dimethylethanolamin und 1853,1 Teilen deionisiertem Wasser zugegeben und das Methylethylketon im Vakuum vollständig abdestilliert. Man erhält eine Polyurethandispersion mit einem Festkörpergehalt von 33 % und einem pH-Wert von 8,66. Das Polymere hat eine Säurezahl von 14.

### 2.8 Polyurethandispersion 8 (ohne PTHF)

Es wird wie bei der Herstellung von Polyurethandispersion 5 verfahren. Anstelle von 840,0 Teilen Polytetrahydrofuran 2000 werden jedoch 845 Teile von Polyester verwendet. Man erhält eine Polyurethandispersion mit einem Festkörpergehalt von 33 % und einem pH-Wert von 8,86. Das Polymere hat eine Säurezahl von 14.

### 3. Herstellung von Basislacken

Aus den beschriebenen Polyurethandispersionen wurden weiße Uni-Basislacke sowie ein Metallic-Basislack hergestellt und auf ihre Verwendbarkeit für einen 3-Schichtaufbau ohne Füller geprüft.

In der nachfolgenden Tabelle I sind die Zusammensetzungen der einzelnen Wasserbasislacke aufgeführt. Dabei handelt es sich bei den Beispielen 1 bis 5 um Uni-Wasserbasislacke und bei Beispiel 6 um einen Metallic-Wasserbasislack.
Die Beispiele 1 bis 3 und 6 sind erfindungsgemäße Ausführungsformen; bei den Beispielen 4 und 5 handelt es sich um Vergleichsbeispiele.

**Tabelle I**

| Komponente/Beispiel | Bsp. 1 | Bsp. 2 | Bsp. 3 | Bsp. 4 (vgl.) | Bsp. 5 (Vgl.) | Bsp. 6 |
|---|---|---|---|---|---|---|
| | | | | | | |
| PU-Dispersion 1 | 116.1 | | | | 341.2 | 190.4 |
| PU-Dispersion 2 | | 119,4 | | | | |
| PU-Dispersion 3 | | | 116,1 | | | |
| PU-Dispersion 4 | | | | 116,1 | | |
| Dimethylethanolamin | 2 | 2 | 2 | 2 | 4,3 | 3.3 |
| deionisiertes Wasser | 35 | 30 | 35 | 35 | | 255 |
| Surfinol 104E* | 5,8 | 5,8 | 5,8 | 5,8 | 5,8 | |
| TiO₂ Kronos 2057 | 351,4 | 351,4 | 351,4 | 351,4 | 351,4 | 8.3 |
| | | | | | | 14.5 |
| mahlen bis zu einer Kornfeinheit < 5 µm, dann auflacken mit | | | | | | |
| | | | | | | |
| PU-Dispersion 5 | 238,7 | | | | | 423,2 |
| PU-Dispersion 6 | | 246,2 | | | | |
| PU-Dispersion 7 | | | 238,7 | | | |
| PU-Dispersion 8 | | | | 238,7 | | |
| Luwipal 072** | 28,5 | 28,5 | 28,5 | 28,5 | 28,5 | 85,6 |
| Butylglykol | 39,6 | 39,6 | 39,6 | 39,6 | 39,6 | |
| Polyestermicrogel*** | 77,4 | 77,4 | 77,4 | 77,4 | 77,4 | 250,4 |
| Latekoll**** | | | | | | 19,2 |
| Dimethylethanolamin | | | | | | 1,9 |
| deionisiertes Wasser | | | | | | 323,2 |
| handelsübliches Glimmerpigment | | | | | | 11,2 |
| Aluminiumbronze | | | | | | 37,9 |
| Butylglykol | | | | | | 69,4 |
| mit DMEA auf pH von 8,8 bis 9,0 einstellen | | | | | | |
| Viskosität mit deionisiertern Wasser auf 130 bis 150 mPas (D = 1000 s⁻¹) einstellen | | | | | | |
| Festkörpergehalt | 53% | 54% | 51% | 49% | 52% | |

| | | | | | | |
|---|---|---|---|---|---|---|
| * handelsüblicher Entschäumer | | | | | | |
| ** Melaminharz, 73%ig in Butanol, Handelsproclukt der Firma BASF AG, Ludwigshafen | | | | | | |
| *** in Dispersion, hergestellt nach DE-A-39 40 316 (mit 25% Festkörpergehalt) | | | | | | |
| **** Acrylatverdicker (25 % Festkörpergehalt), Handelsprodukt der Firma BASF AG | | | | | | |

### Beschreibung des Kugelstoßtests:

Für die Durchführung des Kugelstoßtests (nach Mercedes-Benz) wurden alle Basislacke auf 10 cm breite und 20 cm lange, phosphatierte, mit KTL beschichtete Prüfbleche lackiert (Trockenschichtstärke 25 - 30 µm). Nach 3 Min. Ablüften und 5 Min. Zwischentrocknung bei 80 °C wurden die Bleche mit handelsüblichem 2-Komponenten Klarlack überlackiert. (Trockenschichtstärke 35 - 40 µm)
Die Bleche wurden bei -20 °C mit 250 km/h beschossen, Kugeldurchmesser 2 mm.
Freigabekriterien: Rostgrad max. 1, Abplatzungsgröße max. 8 mm².

### Beschreibung der Prüfung für Kochsicherheit:

Der Basislack wird mittels eines Spritzautomaten mit Druckluftzerstäubung auf eine senkrecht stehende Lochtafel mit einer keilförmig aufgebauten Schichtdicke appliziert. Nach 3 Min. Ahlüften werden die Bleche senkrecht stehend 5 Min. bei 80 °C vorgetrocknet und anschließend mit handelsüblichem 2-Komponenten Klarlack überlackiert (Trockenschichtstärke 35 - 40 µm). Es wird die Schichtdicke des Basislackes angegeben, bei der die ersten Kocherblasen entstehen.

### Beschreibung der Prüfung für Laufsicherheit:

Der Basislack wird mittels eines Spritzautomaten mit Druckluftzerstäuhung auf eine senkrecht stehende Lochtafel mit einer keilförmig aufgebauten Schichtdicke appliziert. Nach 3 Min. Ablüften werden die Bleche senkrecht stehend 5 Min. bei 80 °C vorgetrocknet und anschließend 10 Min. bei 130 °C eingebrannt. Es wird die Schichtdicke des Basislackes angegehen, bei der die ersten Läufer entstehen.

In der nachfolgenden Tabelle II sind die Ergebnisse der einzelnen Tests aufgeführt.

**Tabelle II**

| | | Kugelstoßtest Mercedes-Benz | | | |
|---|---|---|---|---|---|
| Art des Lacks | Beispiel | Rostgrad | Abplatzungsgröße | Läufergrenze | Kochergrenze |
| Uni-WBL | 1 | 0 - 1 | 4 mm² | 49 µm | 47 µm |
| | 2 | 0 - 1 | 2 mm² | 50 µm | 46 µm |
| | 3 | 2 | 8 mm² | 25 µm | 32 µm |
| | 4 (Vergl.) | 5 | 8 mm² | 25 µm | 33 µm |
| | 5 (Vergl.) | 1 | 8 mm² | 26 µm | 28 µm |
| Metallic-WBL | 6 | 0 - 1 | 5 mm² | 28 µm | 32 µm |

## Patentansprüche

1. Beschichtungszusammensetzung, erhältlich durch Mischen
a) einer Zusammensetzung A, diese enthaltend eine Dispersion eines Polyurethans mit einer Säurezahl von mehr als 20, das als Weichsegment mindestens ein Polytetrahydrofuransegment mit einem zahlenmittleren Molekulargewicht zwischen 650 und 5.000 und als Hartsegment mindestens ein von einem Diisocyanat abgeleitetes Segment aufweist; mit
b) einer Zusammensetzung B, diese enthaltend eine Dispersion eines Polyurethans mit einer Säurezahl von weniger als 20, das als Weichsegment mindestens ein Polytetrahydrofuransegment mit einem zahlenmittleren Molekulargewicht zwischen 800 und 5.000 und als Hartsegment mindestens ein aus von einem Diisocyanat abgeleitetes Segment aufweist.

2. Beschichtungszusammensetzung nach Anspruch 1, dadurch gekennzeichnet, daß die Zusammensetzung A zusätzlich mindestens ein farbgebendes Pigment aufweist.

3. Beschichtungszusammensetzung nach Anspruch 1 oder 2, dadurch gekennzeichnet, daß die Zusammensetzung B zusätzlich ein Effektpigment, einen Vernetzer, handelsübliche Additive und/oder weitere Bindemittel enthält.

4. Beschichtungszusammensetzung nach einem der vorherigen Ansprüche, dadurch gekennzeichnet, daß das Polytetrahydrofuransegment ein zahlenmittleres Molekulargewicht zwischen 1.000 und 2.900 aufweist.

5. Beschichtungszusammensetzung nach einem der vorherigen Ansprüche, dadurch gekennzeichnet, daß das Polytetrahydrofuransegment ein zahlenmittleres Molekulargewicht von 2.000 aufweist.

6. Beschichtungszusammensetzung nach einem der vorherigen Ansprüche, dadurch gekennzeichnet, daß das Hartsegment von einem Diisocyanat abgeleitet ist, das ausgewählt ist aus aromatischen Diisocyanaten wie 3,3'-Dimethyl-4,4'-diphenylmethandiisocyanat (3,3'-dimethyl-4,4'-diisocyanatodiphenylmethan), 4,4'-Methylendiphenyldiisocyanat (MDI, 4,4'-Diisocyanatodiphenylmethan), 2,4-Toluylendiisocyanat (TDI, 2,4-Diisocyanatotoluol), Tolidin-4,4'-diisocyant (TODI, 3,3'-Dimethyl-4,4'-diisocyanatobenzidin), 1,5-Naphtylendiisocyanat (NDI, 1,5-Diisocyanatonaphtalin), 1,3-Bis(3-isocyanato-4-methylphenyl)-2,4-dioxo-1,3-diazetidin (Desmodur TT), und 1,3-Bis(1-1;ocyanato-1-methylethyl)benzol (TMXDI, m-Tetramethylxylylendiisocyanat); und insbesondere aus aliphatischen Diisocyanaten wie 1,'1-Methylenbis(4-isocyanatocyclohexan) (4,4'-Dicyclohexylmethandiisocyanat, Desmodur W), Hexamethylendiisocyanat (HMI)I, 1,6-Diisocyanatohexan, Desmodur H), isophorondiisocyanat (IPDI, 3,5,5-Trimethyl-1-isocyanato-3-isocyanatomethylcyclohexan), 1,4-Cyclohexyldiisocyanat (CHDI, trans,-trans-1,4-Diisocyanatocyclohexan).

7. Beschichtungszusammensetzung nach Anspruch 6, dadurch gekennzeichnet, daß das Diisocyanat ersetzt ist durch - bezogen auf die Isocyanatkomponente des Polyurethans - 0,1 bis 2 Gew.-% Triisocyanate, ausgewählt aus aromatischen Triisocyanaten wie Tris(4-isocyanatophenyl)methan (Desmodur R), 1,3,5-Tris(3-isocyanato-4-methylphenyl)-2,4,6-trioxohexahydro-1,3,5-triazin (Desmodur IL); Addukten aus aromatischen Diisocyanaten wie das Addukt von 2,4-Toluylendiisocyanat (TDI, 2,4-Diisocyanatotoluol) und Trimethylolpropan (Desmodur L); und insbesondere aus aliphatischen Triisocyanaten wie N-Isocyanatohexylaminocarbonyl-N,N'-bis(isocyanatohexyl)harnstoff (Desmodur N), 2,4,6-Trioxo-1,3,5-tris(6-isocyanatohexyl)hexahydro-1,3,5-triazin (Desmodur N3390), 2,4,6-Trioxo-1,3,5-tris(5-isocyanato-1,3,3-trimethylcyclohexylmethyl)hexahydro-1,3,5-triazin (Desmodur Z4370).

8. Beschichtungszusammensetzung nach einem der vorherigen Ansprüche, dadurch gekennzeichnet, daß der Anteil an Polyurethan in der Beschichtungszusammensetzung insgesamt, bezogen auf den Festkörper der Beschichtungszusammensetzung, zwischen 10 und 85 %, vorzugsweise zwischen 20 und 65 %, insbesondere zwischen 30 und 60 %, liegt.

9. Beschichtungszusammensetzung nach einem der vorherigen Ansprüche, dadurch gekennzeichnet, daß das Verhältnis von Zusammensetzung A zur Zusammensetzung B bezogen auf deren Festkörper zwischen 1 : 5 und 8 : 1, vorzugsweise zwischen 1 : 4 und 4 : 1, insbesondere 1 : 2 und 2 : 1, beträgt.

10. Beschichtungszusammensetzung nach einem der vorherigen Ansprüche, dadurch gekennzeichnet, daß das zahlenmittlere Molekulargewicht des Polyurethans zwischen 4.000 und 50.000, vorzugsweise zwischen 6.000 und 25.000, liegt.

11. Beschichtungszusammensetzung nach einem der vorherigen Ansprüche, dadurch gekennzeichnet, daß der Anteil an Polytetrahydroftlransegment in dem Polyurethan, bezogen auf den Festkörper des Polyurethans, zwischen 30 und 80 %, vorzugsweise zwischen 45 und 70 %, liegt.

12. Beschichtungszusammensetzung nach einem der vorherigen Ansprüche, dadurch gekennzeichnet, daß das Polyurethan zusätzlich ein kurzkettiges Polyolsegment mit 2 bis 12 Kohlenstoffatomen aufweist, das vorzugsweise ausgewählt ist aus 1,6-Hexandiol, Neopentylglykol, Dimethylolcyclohexan, Trimethylolpropanmonoallylether, Hydroxypivalinsäureneopentylglykolester, Ethylenglykol, Propylenglykol, Trimethylolpropan.

13. Beschichtungszusammensetzung nach einem der vorherigen Ansprüche, dadurch gekennzeichnet, daß der Anteil des aus dem Diisocyanat abgeleiteten Segments in dem Polyurethan, bezogen auf den Festkörper des Polyurethans, zwischen 5 und 40 %, vorzugsweise zwischen 10 und 20 %, liegt.

14. Beschichtungszusammensetzung nach einem der vorherigen Ansprüche, dadurch gekennzeichnet, daß das Polyurethan als Kettenverlängerungsmittel mindestens ein Di- oder Polyaminsegment, insbesondere ein 2-Methyldiaminopentan-, Ethylendiamin, N,N-Diethylentriamin-, Adipinsäurebishydrazid- oder Hydrazinsegment aufweist.

15. Beschichtungszusammensetzung nach einem der vorherigen Ansprüche, dadurch gekennzeichnet, daß das Polyurethan der Zusammensetzung B teilweise durch ein Polyesterharz oder eine wäßrige Polyesterdispersion ersetzt ist.

16. Beschichtungszusammensetzung nach einem der vorherigen Ansprüche, dadurch gekennzeichnet, daß die Beschichtungszusammensetzung zusätzlich mindestens einen Vernetzer enthält, ausgewählt aus verkappten Isocyanaten, Melaminharzen und insbesondere Tris(alkoxycarbonylamino)-1,3,5-triazin.

17. Verwendung einer Beschichtungszusammensetzung nach einem der vorherigen Ansprüche zur Herstellung einer Beschichtung für ein elektrisch leitfähiges Substrat oder für eine Kunststoffoberfläche.

18. Verwendung nach Anspruch 17, dadurch gekennzeichnet, daß die Beschichtung eine Mehrschichtlackierung ist, insbesondere für die Automobilindustrie.

19. Verwendung nach Anspruch 18, dadurch gekennzeichnet, daß die Mehrschichtlackierung aus drei voneinander verschiedenen Schichten besteht, d.h. aus
a) einer ersten, auf dem elektrisch leitfähigen Substrat befindlichen Schicht aus einem elektrophoretisch abgeschiedenen Überzugsmittel;
b) einer zweiten, farbgebenden Schicht aus der Beschichtungszusammensetzung nach einem der Ansprüche 1 bis 16; und
c) einer dritten Schicht aus einem Klarlack.

20. Verwendung nach Anspruch 18, dadurch gekennzeichnet, daß die Mehrschichtlackierung aus vier voneinander verschiedenen Schichten besteht, d.h. aus
a) einer ersten, auf dem elektrisch leitfähigen Substrat befindlichen Schicht aus einem elektrophoretisch abgeschiedenen Überzugsmittel;
b) einer zweiten Schicht aus einer Grundierung oder einem Füller;
c) einer dritten, farbgebenden Schicht aus der Beschichtungszusammensetzung nach einem der Ansprüche 1 bis 16; und
d) einer vierten Schicht aus einem Klarlack.

21. Verwendung nach einem der Ansprüche 17 bis 20, dadurch gekennzeichnet, daß die Dicke der ausgehärteten, aus der Beschichtungszusammensetzung nach einem der Ansprüche 1 bis 16 hergestellten Schicht zwischen 15 und 55 µm beträgt.

22. Verwendung nach einem der Ansprüche 19 oder 21, dadurch gekennzeichnet, daß die Schicht aus einem Klarlack hergestellt ist aus einem Pulverklarlack oder einer Pulverklarlackslurry.

## Claims

1. Coating compound, obtainable by mixing
a) a compound A containing a dispersion of a polyurethane having an acid value greater than 20, that displays as soft segment at least one polytetrahydrofuran segment having a number-average molecular weight between 650 and 5,000 and as rigid segment at least one segment derived from a diisocyanate; with
b) a compound B containing a dispersion of a polyurethane having an acid value less than 20, that displays as soft segment at least one polytetrahydrofuran segment having a number-average molecular weight between 800 and 5,000 and as rigid segment at least one segment derived from a diisocyanate.

2. Coating compound according to claim 1, characterised in that the compound A additionally displays at least one colour-imparting pigment.

3. Coating compound according to claim 1 or 2,
characterised in that the compound B additionally contains a special-effect pigment, a cross-linking agent, commercial additives and/or further binders.

4. Coating compound according to one of the previous claims, characterised in that the polytetrahydrofuran segment displays a number-average molecular weight between 1,000 and 2,900.

5. Coating compound according to one of the previous claims, characterised in that the polytetrahydrofuran segment displays a number-average molecular weight of 2,000.

6. Coating compound according to one of the previous claims, characterised in that the rigid segment is derived from a diisocyanate selected from aromatic diisocyanates such as 3,3'-dimethyl-4,4'-diphenylmethane diisocyanate (3,3'-dimethyl-4,4'-diisocyanatodiphenylmethane), 4,4'-methylene diphenyl diisocyanate (MDI, 4,4'-diisocyanatodiphenylmethane), 2,4-toluylene diisocyanate (TDI, 2,4-diisocyanatotoluene), tolidine-4,4'-diisocyanate (TODI, 3,3'-dimethyl-4,4'-diisocyanatobenzidine), 1,5-naphthylene diisocyanate (NDI, 1,5 diisocyanatonaphthaline), 1,3-bis(3-isocyanato-4-methylphenyl)-2,4-dioxo-1,3-diazetidine (Desmodur TT) and 1,3-bis(1-isocyanato-1-methylethyl)benzene (TMXDI, m-tetramethylxylylene diisocyanate); and in particular from aliphatic diisocyanates such as 1,1-methylene bis(4-isocyanatocyclohexane) (4,4'-dicyclohexylmethane diisocyanate, Desmodur W), hexamethylene diisocyanate (HMDI, 1,6-diisocyanatohexane, Desmodur H), isophorone diisocyanate (IPDI, 3,5,5-trimethyl-1-isocyanato-3-isocyanatomethylcyclohexane), 1,4-cyclohexyl diisocyanate (CHDI, trans,-trans-1,4-diisocyanatocyclohexane).

7. Coating compound according to claim 6, characterised in that the diisocyanate is substituted by - relative to the isocyanate component of the polyurethane - 0.1 to 2 wt.% triisocyanates selected from aromatic triisocyanates such as tris(4-isocyanatophenyl)methane (Desmodur R), 1,3,5-tris(3-isocyanato-4-methylphenyl)-2,4,6-trioxohexahydro-1,3,5-triazine (Desmodur IL); adducts of aromatic diisocyanates such as the adduct of 2,4-toluylene diisocyanate (TDI, 2,4-diisocyanatotoluene) and trimethylol propane (Desmodur L); and in particular from aliphatic triisocyanates such as N-isocyanatohexylaminocarbonyl-N,N'-bis(isocyanatohexyl)urea (Desmodur N), 2,4,6-trioxo-1,3,5-tris(6-isocyanatohexyl)hexahydro-1,3,5-triazine (Desmodur N3390), 2,4,6-trioxo-1,3,5-tris(5-isocyanato-1,3,3-trimethylcyclohexylmethyl)hexahydro-1,3,5-triazine (Desmodur Z4370).

8. Coating compound according to one of the previous claims, characterised in that the total proportion of polyurethane in the coating compound, relative to the solids in the coating compound, is between 10 and 85 %, preferably between 20 and 65 %, particularly between 30 and 60 %.

9. Coating compound according to one of the previous claims, characterised in that the ratio of compound A to compound B relative to the solids therein is between 1:5 and 8:1, preferably between 1:4 and 4:1, particularly 1:2 and 2:1.

10. Coating compound according to one of the previous claims, characterised in that the number-average molecular weight of the polyurethane is between 4,000 and 50,000, preferably between 6,000 and 25,000.

11. Coating compound according to one of the previous claims, characterised in that the proportion of polytetrahydrofuran segment in the polyurethane, relative to the solids in the polyurethane, is between 30 and 80 %, preferably between 45 and 70 %.

12. Coating compound according to one of the previous claims, characterised in that the polyurethane additionally displays a short-chain polyol segment having 2 to 12 carbon atoms, preferably selected from 1,6-hexanediol, neopentylglycol, dimethylol cyclohexane, trimethylol propane monoallylether, hydroxypivalic acid neopentylglycol ester, ethylene glycol, propylene glycol, trimethylol propane.

13. Coating compound according to one of the previous claims, characterised in that the proportion of the diisocyanate-derived segment in the polyurethane, relative to the solids in the polyurethane, is between 5 and 40 %, preferably between 10 and 20 %.

14. Coating compound according to one of the previous claims, characterised in that the polyurethane displays at least one diamine or polyamine segment as chain extender, in particular a 2-methyldiaminopentane, ethylene diamine, N,N-diethylene triamine, adipic acid bis-hydrazide or hydrazine segment.

15. Coating compound according to one of the previous claims, characterised in that the polyurethane in compound B is partially substituted by a polyester resin or an aqueous polyester dispersion.

16. Coating compound according to one of the previous claims, characterised in that the coating compound additionally contains at least one cross-linking agent selected from capped isocyanates, melamine resins and in particular tris(alkoxycarbonylamino)-1,3,5-triazine.

17. Use of a coating compound according to one of the previous claims in the manufacture of a coating for an electrically conductive substrate or for a plastics surface.

18. Use according to claim 17, characterised in that the coating is a multi-coat paint film, particularly for the automotive industry.

19. Use according to claim 18, characterised in that the multi-coat paint film consists of three mutually different coats, namely
a) a first coat applied to the electrically conductive substrate consisting of an electrophoretically deposited coating composition;
b) a second, colour-imparting coat consisting of the coating compound according to one of claims 1 to 16; and
c) a third coat consisting of a clear lacquer.

20. Use according to claim 18, characterised in that the multi-coat paint film consists of four mutually different coats, namely
a) a first coat applied to the electrically conductive substrate consisting of an electrophoretically deposited coating composition;
b) a second coat consisting of a primer or filler;
c) a third, colour-imparting coat consisting of the coating compound according to one of claims 1 to 16; and
d) a fourth coat consisting of a clear lacquer.

21. Use according to one of claims 17 to 20, characterised in that the thickness of the cured coat produced from the coating compound according to one of claims 1 to 16 is between 15 and 55 µm.

22. Use according to one of claims 19 or 21, characterised in that the coat consisting of a clear lacquer is produced from a clear powder coating or a clear powder coating slurry.

## Revendications

1. Composition de revêtement que l'on peut obtenir en mélangeant
a) une composition A qui contient une dispersion d'un polyuréthane ayant un indice d'acidité supérieur à 20, lequel présente comme segment mou au moins un segment polytétrahydrofuranne ayant un poids moléculaire moyen en nombre compris entre 650 et 5000 et comme segment dur au moins un segment dérivé d'un diisocyanate ; avec
b) une composition B qui contient une dispersion d'un polyuréthane ayant un indice d'acidité inférieur à 20, lequel présente comme segment mou au moins un segment polytétrahydrofuranne ayant un poids moléculaire moyen en nombre compris entre 800 et 5000 et comme segment dur au moins un segment dérivé d'un diisocyanate.

2. Composition de revêtement selon la revendication 1, caractérisée en ce que la composition A présente, en outre, au moins un pigment colorant.

3. Composition de revêtement selon la revendication 1 ou 2, caractérisée en ce que la composition B contient, en outre, un pigment à effets, un agent réticulant, des additifs commercialisés ordinairement et/ou d'autres liants.

4. Composition de revêtement selon l'une des revendications précédentes, caractérisée en ce que le segment polytétrahydrofuranne présente un poids moléculaire moyen en nombre compris entre 1000 et 2900.

5. Composition de revêtement selon l'une des revendications précédentes, caractérisée en ce que le segment polytétrahydrofuranne présente un poids moléculaire moyen en nombre de 2000.

6. Composition de revêtement selon l'une des revendications précédentes, caractérisée en ce que le segment dur est dérivé d'un diisocyanate qui est choisi parmi les diisocyanates aromatiques comme le diisocyanate de 3,3'-diméthyl-4,4'-diphénylméthane (3,3'-diméthyl-4,4'-diisocyanatodiphénylméthane), le diisocyanate de 4,4'-méthylènediphényle (MDI, 4,4'-diisocyanatodiphénylméthane), le diisocyanate de 2,4-toluylène (TDI, 2,4-diisocyanatotoluène), le 4,4'-diisocyanate de tolidine (TODI, 3,3'-diméthyl-4,4'-diisocyanatobenzidine), le diisocyanate de 1,5-naphtylène (NDI, 1,5-diisocyanatonaphtalène, la 1,3-bis(3-isocyanato-4-méthylphényl)-2,4-dioxo-1,3-diazétidine (Desmodur TT), et le 1,3-bis(1-isocyanato-1-méthyléthyl)benzène (TMXDI, diisocyanate de m-tétraméthylxylylène) ; et en particulier parmi les diisocyanates aliphatiques comme le 1,1-méthylènebis(4-isocyanatocyclohexane) (diisocyanate de 4,4'-dicyclohexylméthane, Desmodur W), le diisocyanate d'hexaméthylène (HMDI, 1,6-diisocyanatohexane, Desmodur H), le diisocyanate d'isophorone (IPDI, 3,5,5-triméthyl-1-isocyanato-3-isocyanatométhylcyclohexane), le diisocyanate de 1,4-cyclohexyle (CHDI, trans,-trans-1,4-diisocyanatocyclohexane).

7. Composition de revêtement selon la revendication 6, caractérisée en ce que le diisocyanate est remplacé par - rapporté au composant isocyanate du polyuréthane - 0,1 à 2 % en poids de triisocyanates, choisis parmi les triisocyanates aromatiques comme le tris(4-isocyanatophényl)méthane (Desmodur R), la 1,3,5-tris(3-isocyanato-4-méthylphényl)-2,4,6-trioxohexahydro-1,3,5-triazine (Desmodur IL) ; les produits d'addition provenant de diisocyanates aromatiques comme le produit d'addition du diisocyanate de 2,4-toluylène (TDI, 2,4-diisocyanatotoluène) et le triméthylolpropane (Desmodur L) ; et en particulier de triisocyanates aliphatiques comme la N-isocyanatohexylaminocarbonyl-N,N'-bis(isocyanatohexyl)urée (Desmodur N), la 2,4,6-trioxo-1,3,5-tris(6-isocyanatohexyl)hexahydro-1,3,5-triazine (Desmodur N3390), la 2,4,6-trioxo-1,3,5-tris(5-isocyanato-1,3,3-triméthylcyclohexylméthyl)hexahydro-1,3,5-triazine (Desmodur Z4370).

8. Composition de revêtement selon l'une des revendications précédentes, caractérisée en ce que la proportion de polyuréthane dans la composition de revêtement se situe au total, rapportée au solide de la composition de revêtement, entre 10 et 85 %, de préférence entre 20 et 65 %, en particulier entre 30 et 60 %.

9. Composition de revêtement selon l'une des revendications précédentes, caractérisée en ce que le rapport de la composition A à la composition B, rapporté au corps solide, se situe entre 1:5 et 8:1, de préférence entre 1:4 et 4:1, en particulier entre 1:2 et 2:1.

10. Composition de revêtement selon l'une des revendications précédentes, caractérisée en ce que le poids moléculaire moyen en nombre du polyuréthane se situe entre 4000 et 50 000, de préférence entre 6000 et 25 000.

11. Composition de revêtement selon l'une des revendications précédentes, caractérisée en ce que la proportion de segment polytétrahydrofuranne dans le polyuréthane, rapportée au solide du polyuréthane, se situe entre 30 et 80 %, de préférence entre 45 et 70 %.

12. Composition de revêtement selon l'une des revendications précédentes, caractérisée en ce que le polyuréthane présente, en outre, un segment polyol à chaîne courte ayant 2 à 12 atomes de carbone, lequel est, de préférence, choisi parmi le 1,6-hexanediol, le néopentylglycol, le diméthylolcyclohexane, l'éther monoallylique de triméthylolpropane, l'hydroxypivalate de néopentylglycol, l'éthylèneglycol, le propylèneglycol, le triméthylolpropane.

13. Composition de revêtement selon l'une des revendications précédentes, caractérisée en ce que la proportion de segment dérivé du diisocyanate dans le polyuréthane, rapportée au solide du polyuréthane, est comprise entre 5 et 40 %, de préférence entre 10 et 20 %.

14. Composition de revêtement selon l'une des revendications précédentes, caractérisée en ce que le polyuréthane en tant qu'agent d'allongement de chaîne contient au moins un segment di- ou polyamine, en particulier un segment 2-méthyldiaminopentane, éthylènediamine, N,N-diéthylènetriamine, hydrazide ou hydrazine de l'acide adipique.

15. Composition de revêtement selon l'une des revendications précédentes, caractérisée en ce que le polyuréthane de la composition B est partiellement remplacé par une résine polyester ou une dispersion aqueuse de polyester.

16. Composition de revêtement selon l'une des revendications précédentes, caractérisée en ce que la composition de revêtement contient, en outre, au moins un agent réticulant choisi parmi les isocyanates masqués, les résines mélamine et en particulier la tris(alcoxycarbonylamino)-1,3,5-triazine.

17. Utilisation d'une composition de revêtement selon l'une des revendications précédentes pour la production d'un revêtement pour substrat conducteur de l'électricité ou pour surface de matière plastique.

18. Utilisation selon la revendication 17, caractérisée en ce que le revêtement est un vernis multicouche, en particulier pour l'industrie automobile.

19. Utilisation selon la revendication 18, caractérisée en ce que le vernis multicouche se compose de trois couches différentes les unes des autres, c'est-à-dire
a) d'une première couche qui se trouve sur le substrat conducteur de l'électricité et qui est constituée d'un revêtement déposé par électrophorèse ;
b) d'une seconde couche, colorante, ayant la composition de revêtement selon l'une des revendications 1 à 6 ; et
c) d'une troisième couche faite d'un vernis transparent.

20. Utilisation selon la revendication 18, caractérisée en ce que le revêtement multicouche se compose de quatre couches différentes les unes des autres, c'est-à-dire
a) d'une première couche, se trouvant sur le substrat conducteur de l'électricité, et faite d'un revêtement déposé par électrophorèse ;
b) d'une seconde couche faite d'un apprêt ou d'une charge ;
c) d'une troisième couche, colorante, faite de la composition de revêtement selon l'une des revendications 1 à 16 ; et
d) d'une quatrième couche faite d'un vernis transparent.

21. Utilisation selon l'une des revendications 17 à 20, caractérisée en ce que l'épaisseur de la couche durcie, produite à partir de la composition de revêtement selon l'une des revendications 1 à 16, est comprise entre 15 et 55 µm.

22. Utilisation selon l'une des revendications 19 ou 21, caractérisée en ce que la couche se compose d'un vernis transparent produit à partir d'un vernis transparent pulvérulent ou d'une bouillie de vernis transparent pulvérulent.
